# EUROPÄISCHE PATENTSCHRIFT

(11) **EP 3 204 621 B1**
(45) Veröffentlichungstag und Bekanntmachung des Hinweises auf die Patenterteilung: **28.07.2021**
(21) Anmeldenummer: 15763575.6
(22) Anmeldetag: 15.09.2015
(51) Int. Cl.: F01D 17/08, F01D 17/26, G01F 1/34, F01K 13/02, F01K 7/20, F01K 7/16, F01D 17/14

(54) **VORRICHTUNG UND VERFAHREN ZUR REGELUNG EINES DAMPFMASSENSTROMS BEI EINER DAMPFTURBINE**
DEVICE AND METHOD FOR CONTROLLING A STEAM MASS FLOW IN THE CASE OF A STEAM TURBINE
DISPOSITIF ET PROCÉDÉ DE RÉGULATION D'UN DÉBIT MASSIQUE DE VAPEUR DANS UNE TURBINE À VAPEUR

(30) Priorität: 11.12.2014 DE 102014225608
(43) Veröffentlichungstag der Anmeldung: 16.08.2017
(73) Patentinhaber: Siemens Energy Global GmbH & Co. KG, 81739 München (DE)
(72) Erfinder: BARTH, Michael, 02827 Görlitz (DE); HAJE, Detlef, 02828 Görlitz (DE)
(86) Internationale Anmeldenummer: PCT/EP2015/071029
(87) Internationale Veröffentlichungsnummer: WO 2016/091410

(56) Entgegenhaltungen:
- EP-A2- 2 136 037
- WO-A1-03/093653

## Beschreibung

Die Erfindung betrifft eine Vorrichtung zur Regelung eines Dampfmassenstroms bei einer Dampfturbine nach dem Oberbegriff des unabhängigen Patentanspruchs 1 sowie ein Verfahren zur Regelung eines Dampfmassenstroms bei einer Dampfturbine nach dem Oberbegriff des unabhängigen Patentanspruchs 4.

In einer Dampfturbine wird der Dampf entspannt und dabei die Druckenergie in kinetische Energie umgewandelt. Die kinetische Energie kann anschließend zum Antreiben von weiteren Verbrauchern oder einem Generator zur Erzeugung von elektrischem Strom verwendet werden. Der Dampf wird dabei in der Regel, im überhitzten Zustand in die Dampfturbine eingeleitet. Innerhalb der Dampfturbine durchströmt der Dampf anschließend in der Regel mehrere so genannte Turbinenstufen. Die Turbinenstufen sind zumeist in mindestens einem Hochdruckturbinenteil mit einer oder mehreren Hochdruckstufen und einen Niederdruckturbinenteil mit einen oder mehreren Niederdruckstufen aufgeteilt. Jede Turbinenstufe wird dabei von einem Satz Laufschaufeln, welche am Rotor angeordnet sind und einem Satz Leitschaufeln, welche im Gehäuse angeordnet sind, ausgebildet. In vielen Fällen wird der Dampfturbine entlang des Strömungskanals Dampf entnommen um diese einem angeschlossenen Prozess oder Verbraucher zuzuführen. Die Dampfentnahme erfolgt in der Regel stromabwärts der letzten Hochdruckstufe und stromaufwärts der ersten Niederdruckstufe, da dann der Dampf bereits deutlich entspannt ist, aber dennoch einen Druck und eine Temperatur aufweist, die diesen für angeschlossene Prozesse oder Verbraucher geeignet macht. In der Regel wird dabei für den angeschlossenen Prozess oder den Verbraucher gefordert, dass der entnommene Dampf unabhängig von möglicherweise sich veränderndem Betriebsbedingungen der Dampfturbine mit einem definierten und weitgehend konstanten Druck und einer konstanten Temperatur zur Verfügung gestellt wird. Um dies zu gewährleisten, wird üblicherweise eine Drosselvorrichtung vorgesehen, durch die mittels einer oder mehrerer Drosselungen des Prozessdampfes die geforderten Dampfparameter an der Entnahmestelle einstellbar sind.

Aus der DE 10 2010 041 627 A1 ist eine Dampfturbine mit einer zwischen dem Hochdruckturbinenteil und dem Niederdruckturbinenteil angeordneten Regelventileinrichtung bekannt. Durch die Regelventileinrichtung soll zum einen der von dem Hochdruckturbinenteil in den Niederdruckturbinenteil überströmende Massenstrom des Dampfes geregelt werden, zum anderen soll damit bedarfsweise der gesamte Massenstrom oder ein Teilmassenstrom des Dampfes über einen Zwischenüberhitzer geleitet werden, um den Wassergehalt des in den Niederdruckteil eintretenden Dampfes unterhalb eines definierten Grenzwertes zu halten. Die Regelventileinrichtung ist jedoch mit einem hohen konstruktiven Aufwand verbunden. Zudem kommt es auf Grund der starken Umlenkung der Dampfströmung zu großen Strömungsverlusten.

Aus der WO 2009/007383 A1 ist es bekannt, anstelle einer Regelventileinrichtung gemäß der DE 10 2010 041 627 A1 einen Drehschieber vorzusehen. Der Drehschieber weist einen Festring und einen zum Festring drehbar angeordneten Drehring auf. Durch Verdrehen des Drehrings wird ein mehr oder weniger großer Strömungsquerschnitt freigegeben. Der Drehschieber kann platzsparend um den Rotor der Dampfturbine angeordnet werden. Durch die mehr oder weniger axiale Durchströmung ergeben sich günstigere Strömungsverhältnisse und damit geringere Strömungsverluste. Da der Drehring in der Regel ungeschmiert auf dem Festring gleitet, sind hohe Antriebskräfte zur Betätigung des Drehschiebers erforderlich. Da die Antriebskräfte mit zunehmendem Dampfdruck ansteigen, sind solche Drehschieber für größere Differenzdrücke nicht geeignet. Die EP 2136 037 A2 offenbart Vorrichtung zur Regelung eines Dampfmassenstroms bei einer Dampfturbine (2), insbesondere einer Niederdruckstufe einer Dampfturbine, wobei die Vorrichtung einen Drehschiebers oder ein Regelventil umfasst.

Ausgehend vom vorliegenden Stand der Technik ist es deshalb Aufgabe der vorliegenden Erfindung, eine Vorrichtung zur Regelung eines Dampfmassenstroms bei einer Dampfturbine bereitzustellen, welcher für hohe Druckdifferenzen geeignet ist und welcher trotzdem einen geringen Druckverlust und eine gute Regelung aufweist. Desweiteren ist es Aufgabe der vorliegenden Erfindung ein Verfahren zum Ansteuern einer solchen Vorrichtung bereit zu stellen.

Die Aufgabe wird hinsichtlich der Vorrichtung durch die Merkmale des unabhängigen Patentanspruchs 1 und hinsichtlich des Verfahrens durch die Merkmale des unabhängigen Patentanspruchs 4 gelöst.

Weitere Vorteile der Erfindung, die einzeln und in Kombination miteinander einsetzbar sind, sind Gegenstand der Unteransprüche.

Die erfindungsgemäße Vorrichtung zur Regelung eines Dampfmassenstroms m bei einer Dampfturbine, insbesondere einer Niederdruckstufe einer Dampfturbine, umfasst wenigstens einen Drehschieber und ein weiteres Regelventil. Der Drehschieber und das Regelventil sind dabei parallel zueinander im Strömungspfad der Dampfturbine angeordnet. Die Vorrichtung umfasst dabei wenigstens eine Regeleinrichtung, die die Druckdifferenz Δp aus dem Druck vor und hinter der Vorrichtung bestimmt und welche in Abhängigkeit von der Druckdifferenz Δp den Drehschieber und/oder das Regelventil ansteuert. Durch die erfindungsgemäße Vorrichtung kann je nach Druckdifferenz Δp entweder nur das Regelventil, nur der Drehschieber oder eine Kombination von beiden zum Einsatz gebracht werden. Hierdurch kann vermieden werden, dass es aufgrund zu großer Druckdifferenz Δp zu (zu) hohen Stellkräften am Drehschieber kommt. Andererseits können die Strömungsverluste durch eine geeignete Ansteuerung des Drehschiebers bei niedrigen Druckdifferenzen Δp in Grenzen gehalten werden. Somit kann durch die erfindungsgemäße Vorrichtung ein optimaler Betrieb erzielt werden.

Eine Ausgestaltung der erfindungsgemäßen Vorrichtung zur Regelung eines Dampfmassenstroms ṁ zeichnet sich dadurch aus, dass die Regeleinrichtung bis zu einer vorgebbaren Druckdifferenz Δp₁* ausschließlich das Regelventil ansteuert und unterhalb einer vorgebbaren Druckdifferenz Δp₂* ausschließlich den Drehschieber ansteuert, wobei Δp₁* ≥ Δp₂* ist. Hierdurch wird bei hohen Druckdifferenzen Δp zunächst nur das Regelventil angesteuert. Zur Ansteuerung des Drehschiebers wären in diesem Fall hohe Stellkräfte erforderlich. Ist die Druckdifferenz Δp kleiner als die vorgegebene Druckdifferenz Δp₂* sind die erforderlichen Stellkräfte an Drehschieber so gering, dass dieser mit einfachen Mitteln angesteuert werden kann. In diesem Fall wird nur der Drehschieber zur Regelung des Dampfmassenstroms ṁ verwendet um so die Strömungsverluste gering zu halten.

Eine weitere Ausgestaltung der erfindungsgemäßen Vorrichtung zur Regelung eines Dampfmassenstroms m zeichnet sich dadurch aus, dass die vorgebbare Druckdifferenz Δp₁* der Druckdifferenz entspricht, die bei vollständig geöffnetem Regelventil vorliegt. Das Regelventil wird somit zunächst ausschließlich angesteuert, bis es vollständig geöffnet ist. Erst anschließend erfolgt die Ansteuerung des parallel angeordneten Drehschiebers.

Das erfindungsgemäße Verfahren zur Regelung eines Dampfmassenstroms ṁ bei einer Dampfturbine, insbesondere einer Niederdruckstufe einer Dampfturbine, mit einer zuvor beschriebenen Vorrichtung zeichnet sich durch die folgenden Verfahrensschritte aus:
- Bestimmen der Druckdifferenz Δp;
- Vergleichen der ermittelten Druckdifferenz Δp mit den vorgebbaren Druckdifferenzen Δp₁* und Δp₂*;
- Regelung des Dampfmassenstroms m mittels eines Regelventils durch Ansteuern des Regelventils mittels der Regeleinrichtung, falls die Druckdifferenz Δp ≥ der vorgebbaren Druckdifferenz Δp₁* ist;
- Regelung des Dampfmassenstroms m mittels des Drehschiebers durch Ansteuern des Drehschiebers mittels der Regeleinrichtung, falls die Druckdifferenz Δp kleiner der vorgebbaren Druckdifferenz Δp₂* ist.

Durch das erfindungsgemäße Verfahren kann die Regelung des Dampfmassenstroms ṁ solange durch den Drehschieber und damit strömungsgünstiger erfolgen, solange die Druckdifferenz Δp, die sich aus dem Druck vor und hinter der Vorrichtung ergibt, nicht größer ist, als die vorgegebene Druckdifferenz Δp₂*. Bei einer höheren Druckdifferenz Δp würden die Stellkräfte am Drehschieber zu hoch werden, so dass in diesem Fall die Regelung des Dampfmassenstroms zunächst über das Regelventil erfolgt. Sobald durch das Öffnen des Regelventils die Druckdifferenz Δp unter die vorgebbare Druckdifferenz Δp₂* sinkt, kann die Regelung wieder über den Drehschieber erfolgen. Durch das erfindungsgemäße Verfahren zur Regelung des Dampfmassenstroms m bei der Dampfturbine kann je nach anliegender Druckdifferenz Δp somit die strömungsgünstige Regelung über den Drehschieber oder die Regelung über das Regelventil erfolgen.

Weitere Vorteile der Erfindung werden nachfolgend anhand der
Figuren erläutert. Es zeigt:
   - Figur 1: den grundsätzlichen Aufbau einer erfindungsgemäßen Vorrichtung zur Regelung eines Dampfmassenstroms;
   - Figur 2: Diagramme, die den funktionellen Zusammenhang zwischen dem Ventilhub/Drehwinkel zum Massenstrom und zur Druckdifferenz Δp in Abhängigkeit der Stellgröße x der Regeleinrichtung zeigt.

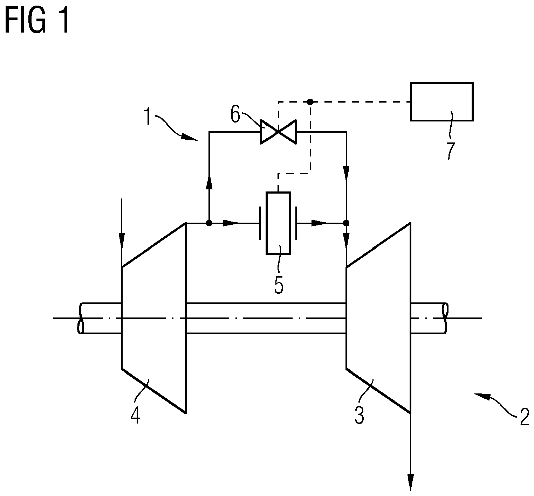

Figur 1 zeigt eine stark vereinfachte und schematische Darstellung einer erfindungsgemäßen Vorrichtung 1 zur Regelung eines Dampfmassenstroms m bei einer Dampfturbine 2. Die Dampfturbine 2 umfasst eine Hochdruckstufe 4 und eine Niederdruckstufe 3. Zwischen der Hochdruckstufe 4 und der Niederdruckstufe 3 der Dampfturbine 2 ist die Vorrichtung 1 angeordnet. Die Vorrichtung 1 umfasst einen Drehschieber 5 und ein weiteres Regelventil 6. Der Drehschieber 5 und das Regelventil 6 sind dabei parallel zueinander im Strömungspfad angeordnet. Die Vorrichtung 1 umfasst weiter eine Regeleinrichtung 7. Die Regeleinrichtung 7 ist in der Lage, die Druckdifferenz Δp, welche sich ergibt aus dem Druck vor und hinter der Vorrichtung 1, zu bestimmen. Die Regeleinrichtung 7 steht mit dem Drehschieber 5 und dem Regelventil 6 in Wirkverbindung und kann über ein Regelsignal x sowohl den Drehschieber 5 als auch das Regelventil 6 ansteuern. Die Ansteuerung des Drehschiebers 5 und des Regelventils 6 können einzeln oder gleichzeitig erfolgen. Aufgrund der hohen benötigten Stellkräfte zum Verstellen des Drehschiebers 5 bei hohen Druckdifferenzen Δp ist es sinnvoll, bei hohen Differenzdrücken Δp ausschließlich das Regelventil 6 anzusteuern. Bei geringen Druckdifferenzen Δp ist es dagegen vorteilhaft, die Regelung ausschließlich über den Drehschieber 5 zu steuern, da der Drehschieber 5 einen geringeren Druckverlust aufweist. Aus dieser grundsätzlichen Überlegung heraus werden in der Regeleinrichtung 7 wenigstens zwei vorgebbare Druckdifferenzen Δp₁* und Δp₂* abgelegt, wobei Δp₁* ≥ Δp₂* ist. Die Regeleinrichtung 7 vergleicht die vorgebbare Druckdifferenz mit der tatsächlich anliegenden Druckdifferenz Δp. Bis zu der vorgebbaren Druckdifferenz Δp₁* wird ausschließlich das Regelventil 6 angesteuert. Unterhalb der vorgebbaren Druckdifferenz Δp₂* wird ausschließlich der Drehschieber 5 angesteuert. Liegt die Druckdifferenz Δp zwischen der Druckdifferenz Δp₁* und Δp₂*, können beide Regelorgane, das heißt der Drehschieber 5 und das Regelventil 6, auch gleichzeitig angesteuert werden. Die vorgebbare Druckdifferenz Δp₁* entspricht annähernd der Druckdifferenz, welche bei vollständig geöffnetem Regelventil 6 vorliegt.

Nachfolgend wird kurz das Verfahren zur Regelung des Dampfmassenstroms ṁ bei der Dampfturbine 2 beschrieben. Zunächst wird dabei die Druckdifferenz Δp, die sich aus dem Druck vor und hinter der Vorrichtung 1 bestimmt, ermittelt. Anschließend erfolgt in der Regeleinrichtung 7 ein Vergleich der ermittelten Druckdifferenz Δp mit den vorgebbaren Druckdifferenzen Δp₁* und Δp₂*. Ist die Druckdifferenz Δp ≥ der vorgebbaren Druckdifferenz Δp₁*, steuert die Regeleinrichtung 7 ausschließlich das Regelventil 6 an und regelt hierüber den Dampfmassenstrom ṁ. Ist die Druckdifferenz Δp kleiner der vorgebbaren Druckdifferenz Δp₂*, steuert die Regeleinrichtung 7 ausschließlich den Drehschieber 5 an und regelt den Dampfmassenstrom ṁ, damit ausschließlich über den Drehschieber 5. Das Verfahren zur Regelung des Dampfmassenstroms ṁ sorgt somit dafür, dass je nach Druckdifferenz Δp die bevorzugte Regeleinrichtung angesteuert wird, das heißt bei hohen Differenzdrücken Δp, das Regelventil 6 und bei niedrigeren Druckdifferenzen Δp der Drehschieber 5. Hierdurch wird bei niedrigen Differenzdrücken Δp der strömungsgünstige Drehschieber 5 bevorzugt angesteuert und bei höheren Drücken das Regelventil 6, so dass die Stellkräfte am Drehschieber nicht zu groß werden.

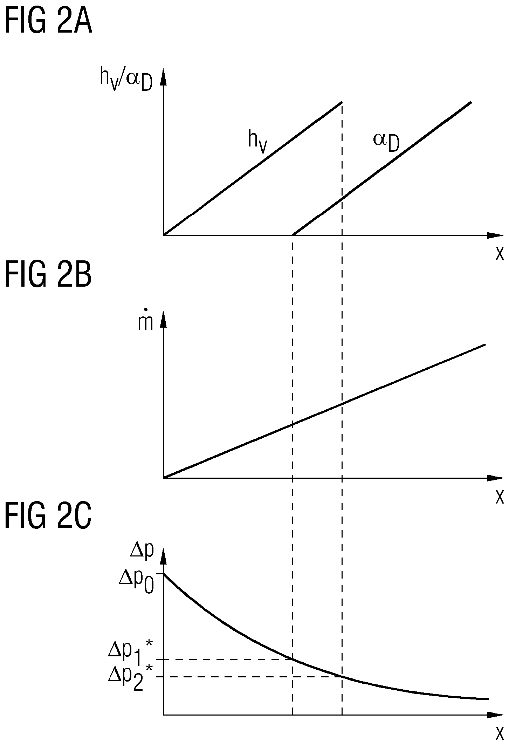

Figur 2 zeigt anhand der Diagramme 2a, 2b und 2c den funktionellen Zusammenhang zwischen dem Ventilhub hᵥ bzw. dem Drehwinkel α_{D} des Drehschiebers 5 und den Dampfmassenstrom m sowie der Druckdifferenz Δp in Abhängigkeit vom Stellsignal x.

Diagramm 2c zeigt die Druckdifferenz Δp in Abhängigkeit vom Stellsignal x. ΔP₀ entspricht dabei der Druckdifferenz, welche bei vollständig geschlossenen Regelventil 6 und vollständig geschlossenen Drehschieber 5 anliegt. Bei einem von der Regeleinrichtung 7 ermittelten Druck ΔP₀, der sowohl größer als der Differenzdruck Δp₁* als auch größer ist als der Differenzdruck Δp₂* wird zunächst ein Regelsignal x an das Regelventil 6 gesendet. Hierdurch wird das Regelventil 6 geöffnet, was in Figur 2a am zunehmenden Ventilhub hᵥ erkennbar ist. Mit zunehmender Ventilöffnung nimmt der Volumenstrom m, wie im Bild 2b zu erkennen ist, zu und die Druckdifferenz Δp, erkennbar in Figur 2c, nimmt ab. Zunächst erfolgt dabei die Regelung des Dampfmassenstroms m ausschließlich über das Regelventil 6 bis die Druckdifferenz Δp einem Wert Δp₁* erreicht. Ermittelt die Regeleinrichtung 7, dass der Druck Δp₁* erreicht ist, steuert es zusätzlich den Drehschieber 5 an. Durch Verdrehen des Drehschiebers 5 um den Drehwinkel α_{D} wird der Drehschieber 5 zunehmend geöffnet, wodurch ein größerer Massenstrom m über den Drehschieber strömen kann. Durch das Öffnen des Drehschiebers 5 nimmt der Differenzdruck Δp weiter ab. Sobald die Regeleinrichtung 7 feststellt, dass der Differenzdruck Δp kleiner ist als die Druckdifferenz Δp₂*, erfolgt die Regelung ausschließlich über den Drehschieber 5. Das Regelventil 6 wird nicht weiter angesteuert bzw. befindet sich bereits in seiner vollständig geöffneten Stellung. Sollte die Differenz Δp, die an der Vorrichtung 1 vorliegt, unterhalb der Druckdifferenz Δp₂* liegen, wird das Regelventil 6 solange geschlossen, bis eine Druckdifferenz anliegt, die mindestens der Druckdifferenz Δp₁* entspricht und die anschließende Regelung des Dampfmassenstroms m erfolgt dann wieder über den Drehschieber 5.

## Patentansprüche

1. Vorrichtung (1) zur Regelung eines Dampfmassenstroms (m) bei einer Dampfturbine (2), insbesondere einer Niederdruckstufe (3) einer Dampfturbine (2), wobei die Vorrichtung (1) wenigstens einen Drehschieber (5) und ein weiteres Regelventil (6) umfasst
**dadurch gekennzeichnet**, das
der Drehschieber (5) und das Regelventil (6) parallel zueinander im Strömungspfad angeordnet sind und wobei die Vorrichtung (1) wenigstens eine Regeleinrichtung (7) umfasst, die eine Druckdifferenz Δp aus dem Druck vor und hinter der Vorrichtung (1) bestimmt und in Abhängigkeit von der Druckdifferenz Δp den Drehschieber (5) und/oder das Regelventil (6) ansteuert.

2. Vorrichtung (1) zur Regelung eines Dampfmassenstroms (ṁ) nach Anspruch 1,
**dadurch gekennzeichnet, dass**
die Regeleinrichtung (7) bis zu einer vorgebbaren Druckdifferenz Δp₁* ausschließlich das Regelventil (6) ansteuert und unterhalb einer vorgebbaren Druckdifferenz Δp₂* ausschließlich den Drehschieber (5) ansteuert, wobei Δp₁* ≥ Δp₂* ist.

3. Vorrichtung (1) zur Regelung eines Dampfmassenstroms (ṁ) nach Anspruch 2,
**dadurch gekennzeichnet, dass**
die vorgebare Druckdifferenz Δp₁* der Druckdifferenz entspricht, die bei vollständig geöffnetem Regelventil (6) vorliegt.

4. Verfahren zur Regelung eines Dampfmassenstroms (ṁ) bei einer Dampfturbine (2), insbesondere einer Niederdruckstufe (3) einer Dampfturbine (2), mit einer Vorrichtung (1) nach einem der vorherigen Ansprüche
**gekennzeichnet durch** die folgenden Verfahrensschritte:
- Bestimmen der Druckdifferenz Δp
- Vergleichen der ermittelten Druckdifferenz Δp mit den vorgebbaren Druckdifferenzen Δp₁* und Δp₂*
- Regelung des Dampfmassenstroms (m) mittels des Regelventils (6) durch Ansteuern des Regelventils (6) mittels der Regeleinrichtung (7) falls die Druckdifferenz Δp ≥ der vorgebbaren Druckdifferenz Δp₁* ist
- Regelung des Dampfmassenstroms (ṁ) mittels des Drehschiebers (5) durch Ansteuern des Drehschiebers (5) mittels der Regeleinrichtung (7) falls die Druckdifferenz Δp < der vorgebbaren Druckdifferenz Δp₂* ist.

## Claims

1. Device (1) for regulating a steam mass flow rate (ṁ) in a steam turbine (2), in particular in a low-pressure stage (3) of a steam turbine (2), wherein the device (1) comprises at least one rotary slide (5) and a further regulating valve (6)
**characterized in that**
the rotary slide (5) and the regulating valve (6) are arranged parallel to one another in the flow path, and wherein the device (1) comprises at least one regulating device (7) which determines a pressure difference Δp from the pressure upstream and downstream of the device (1) and which actuates the rotary slide (5) and/or the regulating valve (6) in dependence on the pressure difference Δp.

2. Device (1) for regulating a steam mass flow rate (ṁ) according to Claim 1,
**characterized in that**
the regulating device (7), down to a predefinable pressure difference Δp₁*, actuates only the regulating valve (6) and, below a predefinable pressure difference Δp₂*, actuates only the rotary slide (5), where Δp₁* ≥ Δp₂*.

3. Device (1) for regulating a steam mass flow rate (ṁ) according to Claim 2,
**characterized in that**
the predefinable pressure difference Δp₁* corresponds to that pressure difference which prevails in the case of the regulating valve (6) being completely open.

4. Method for regulating a steam mass flow rate (ṁ) in a steam turbine (2), in particular in a low-pressure stage (3) of a steam turbine (2), having a device (1) according to one of the preceding claims,
**characterized by** the following method steps:
- determining the pressure difference Δp
- comparing the determined pressure difference Δp with the predefinable pressure differences Δp₁* and Δp₂*
- regulating the steam mass flow rate (ṁ) by means of the regulating valve (6) by actuating the regulating valve (6) by means of the regulating device (7), in case the pressure difference Δp ≥ the predefinable pressure difference Δp₁*
- regulating the steam mass flow rate (m) by means of the rotary slide (5) by actuating the rotary slide (5) by means of the regulating device (7), in case the pressure difference Δp < the predefinable pressure difference Δp₂*.

## Revendications

1. Dispositif (1) destiné au réglage d'un débit massique de vapeur (ṁ) dans une turbine à vapeur (2), en particulier un étage basse pression (3) d'une turbine à vapeur (2), dans lequel le dispositif (1) comprend au moins une vanne rotative (5) et une autre soupape de réglage (6), **caractérisé en ce que** la vanne rotative (5) et la soupape de réglage (6) sont disposées parallèlement l'une à l'autre dans le trajet d'écoulement et dans lequel le dispositif (1) comprend au moins un système de réglage (7) qui détermine une différence de pression Δp à partir de la pression en amont et en aval du dispositif (1) et commande la vanne rotative (5) et/ou la soupape de réglage (6) en fonction de la différence de pression Δp.

2. Dispositif (1) destiné au réglage d'un débit massique de vapeur (m) selon la revendication 1, **caractérisé en ce que** le dispositif de réglage (7) commande la soupape de réglage (6) exclusivement jusqu'à une différence de pression apte à être prédéfinie Δp₁* et commande la vanne rotative (5) exclusivement en dessous d'une différence de pression apte à être prédéfinie Δp₂*, dans lequel Δp₁* ≥ Δp₂*.

3. Dispositif (1) destiné au réglage d'un débit massique de vapeur (ṁ) selon la revendication 2, **caractérisé en ce que** la différence de pression apte à être prédéfinie Δp₁* correspond à la différence de pression qui est présente lorsque la soupape de réglage (6) est entièrement ouverte.

4. Procédé destiné au réglage d'un débit massique de vapeur (ṁ) dans une turbine à vapeur (2), en particulier un étage basse pression (3) d'une turbine à vapeur (2), avec un dispositif (1) selon l'une quelconque des revendications précédentes **caractérisé par** les étapes de procédé suivantes :
- détermination de la différence de pression Δp
- comparaison de la différence de pression Δp déterminée avec les différences de pression aptes à être prédéfinies Δp₁* et Δp₂*
- réglage du débit massique de vapeur (ṁ) au moyen de la soupape de réglage (6) par le biais de la commande de la soupape de réglage (6) au moyen du dispositif de réglage (7) dans le cas où la différence de pression Δp ≥ à la différence de pression apte à être prédéfinie Δp₁*
- réglage du débit massique de vapeur (ṁ) au moyen de la vanne rotative (5) par le biais de la commande de la vanne rotative (5) au moyen du dispositif de réglage (7) dans le cas où la différence de pression Δp < la différence de pression apte à être prédéfinie Δp₂*.
